# EUROPÄISCHE PATENTSCHRIFT

(11) **EP 2 306 470 B1**
(45) Veröffentlichungstag und Bekanntmachung des Hinweises auf die Patenterteilung: **21.08.2013**
(21) Anmeldenummer: 10183932.2
(22) Anmeldetag: 20.10.2006
(51) Int. Cl.: H01C 7/02, H01C 7/04, H01G 4/12, B32B 18/00, C04B 35/486, C03C 14/00, H01G 2/10, H01G 4/10, H01G 4/20, H01G 4/33

(54) **Elektrisches Bauelement**
Electrical Component
Composant Electrique

(30) Priorität: 20.10.2005 DE 102005050638
(43) Veröffentlichungstag der Anmeldung: 06.04.2011
(62) Teilanmeldung aus: 09163271.1
(73) Patentinhaber: EPCOS AG, 81669 München (DE)
(72) Erfinder: Wozniak, Uwe, 8530, Deutschlandsberg (AT); Feichtinger, Thomas, 8010, Graz (AT); Grünbichler, Hermann, 8503, St. Josef (AT); Dudesek, Pavol, Bad Gams, 8524 (AT); Pürstinger, Thomas, 8020, Graz (AT)
(74) Vertreter: Epping - Hermann - Fischer

(56) Entgegenhaltungen:
- EP-A1- 0 312 817
- JP-A- 2004 253 757

## Beschreibung

Es wird ein elektrisches Bauelement mit keramischen Schichten aus unterschiedlichen Materialien beschrieben, sowie ein elektrisches Bauelementmodul mit einem einzigen keramischen Grundkörper, in dem mehrere Elektrodensätze angeordnet sind.

Aus DE 19931056B4 ist ein Vielschichtvaristor mit Innenelektroden bekannt, der eine niedrige Kapazität aufweist.

Aus DE 10136545B4 ist ein keramischer Vielschichtkondensator mit innen liegenden Elektroden bekannt.

Eine zu lösende Aufgabe besteht darin, ein elektrisches Bauelement anzugeben, dessen Grundkörper mehrere keramische Materialien enthält und in einen monolithischen Körper sinterbar ist.

Die Aufgabe wird durch ein elektrisches Bauelement gemäß Anspruch 1 gelöst, das einen keramischen Grundkörper mit mehreren keramischen Schichten aufweist, wobei eine Funktionsschicht an eine Kompositschicht angrenzt und die Kompositschicht eine Zirkonoxid-Glasfüllstoffmischung enthält.

Das elektrische Bauelement wirkt vorzugsweise passiv, indem es nur eine Signalgröße erhält und bei einer angelegten Spannung ein entsprechender Strom erzeugt wird oder umgekehrt. Eine Hilfsenergie, beispielsweise in der Form einer Stromversorgung, wird dabei nicht benötigt.

Die Kompositschicht dient vorzugsweise als Passivierungs- bzw. Isolier- und/oder elektrische Entkopplungsschicht. Dabei kann sie die Funktionsschicht vor äußeren Einflüssen schützen. Wenn Kontaktierungsmittel in der Kompositschicht enthalten sind, können Kopplungskapazitäten zwischen ihnen durch die Entkopplungseigenschaft der Kompositschicht reduziert werden.

Die Kompositschicht wirkt außerdem als Mittel zur Reduzierung bzw. Einstellung der parasitären Kapazität der Funktionsschicht, wodurch der Einfluss auf eine Leiterplatte, auf die das Bauelement montiert werden kann, reduziert bzw. eingestellt werden kann.

Es ist vorteilhaft, dass die Kompositschicht Zirkonoxid enthält, da dieses Material mit anderen Materialien, wie zum Beispiel diejenigen der Funktionsschicht, schlecht reagiert und daher die elektrischen Eigenschaften des elektrischen Bauelements nach der Sinterung der unterschiedlichen Schichten miteinander einstellbar bzw. klar voraussehbar sind. Hiermit wird die Einstellung der elektrischen Kennlinie des Bauelements erleichtert. Mittels der Glasfüllstoff enthaltenden Kompositschicht wird außerdem die Bildung von Unregelmäßigkeiten, wie zum Beispiel Rissen, im Grenzbereich zur Funktionsschicht verringert, sodass auch aus diesem Grund die Einstellung der elektrischen Kennlinie des Bauelements erleichtert wird.

Der Glasfüllstoff der Kompositschicht enthält vorzugsweise Zinkborsilikat (Zn-B-Si) oder Aluminiumsilikat.

Die Funktionsschicht enthält eine Funktionskeramik und weist vorzugsweise eine höhere Dielektrizitätskonstante auf, als die Kompositschicht. Die Funktionskeramik kann eine Varistor- , Kondensator-, NTC- oder PTC-Keramik enthalten.

Als Hauptanteil einer Varistorkeramik wird ZnO bevorzugt. Es kann aber auch SiC verwendet werden. Als Varistor dient das elektrische Bauelement vorzugsweise zur Spannungsstabilisierung, Stoßspannungsbegrenzung sowie Schutz vor Überspannungen.

Die Kondensatorkeramik enthält als Hauptanteil vorzugsweise anorganische, nicht metallische und polykristalline Substanzen, wie z.B. TiO₂ (COG) oder ferroelektrisches BaTiO₃ (X7R oder Z5U), mit oder ohne Sperrschichten. Als Kondensator, insbesondere keramischer Vielschichtkondensator kann das elektrische Bauelement beispielsweise in Mess- und Regeltechnik, Datentechnik, Kommunikationstechnik, Schaltnetzteilen und Kraftfahrzeugelektronik eingesetzt werden.

Als Hauptanteil einer NTC-Keramik werden Fe₃O₄, Fe₂O₃, NiO oder CoO bevorzugt. Ein eine Funktionsschicht mit NTC-Keramik aufweisendes elektrisches Bauelement wird vorzugsweise als Detektor eines Temperaturfühlers eingesetzt. Alternativ kann es zur Einstellung einer Strömungsgeschwindigkeit sowie für Schutz- und Kompensationsaufgaben eingesetzt werden.

Als Hauptanteil einer PTC-Keramik werden BaTiO₃ oder SrTiO₃ bevorzugt. Ein eine Funktionsschicht mit PTC-Keramik aufweisendes elektrisches Bauelement wird vorzugsweise als Bestandteil eines Temperaturfühlers, Thermostats oder zur Stromstabilisierung eingesetzt.

Sowohl die Kompositschicht als auch die Funktionsschicht können mit organischen Binder vermischt worden sein um daraus Schlicker zu schaffen, die später zu Grünfolien verarbeitet werden können. Eine Entbinderung kann dabei während der Sinterung der Schichten miteinander stattfinden.

Es ist günstig, wenn die Kompositschicht eine niedrigere Dielektrizitätskonstante aufweist als die Funktionsschicht, wodurch die Streukapazität im Bereich der Kompositschicht möglichst gering gehalten wird.

Gemäß einer Ausführungsform des elektrischen Bauelements sind Funktionsschichten und Kompositschichten abwechselnd übereinander gestapelt. Dabei können die Kompositschichten sowohl den Boden als auch den oberen Teil des Bauelements bilden, sodass die Funktionsschicht auf ihrer Ober- und ihrer Unterseite jeweils von einer Kompositschicht abgedeckt ist.

Gemäß einer weiteren Ausführungsform des elektrischen Bauelements ist mindestens eine Innenelektrode in bzw. an der Funktionsschicht angeordnet. Es ist vorteilhaft, Innenelektroden im Bauelement vorzusehen, da hiermit eine besonders genaue Einstellung der Kapazitäts- bzw. Widerstandswerte des Bauelements erreicht werden kann.

Es können mehrere Innenelektroden mittels eines Kontaktierungsmittels mit einem Außenkontakt an der Oberfläche des Grundkörpers verbunden sein. Ein Beispiel eines Kontaktierungsmittels ist dabei eine Durchkontaktierung oder ein Draht aus einem elektrisch leitfähigen Material. Es ist günstig, wenn das Kontaktierungsmittel mit einem metallhaltigen Material befüllbar ist. Dabei kann es sich um ein Durchgangsloch in den Keramikmaterialien handeln, welches mit einem Metall befüllt ist, oder um eine Via-Struktur, die mit einem Metall befüllbar ist.

Gemäß einer anderen Ausführungsform des elektrischen Bauelements ist mindestens ein Elektrodensatz, bestehend aus mindestens zwei Innenelektroden, in bzw. an der Funktionsschicht angeordnet. Unter einem Elektrodensatz wird eine Anordnung mehrerer Elektroden verstanden, welche zusammen eine gemeinsame Funktion erfüllen, wie z.B. ein elektrisches Feld in bzw. an einem Dielektrikum zu erzeugen. Es kann sich dabei um einen Stapel mehrerer Elektroden handeln, welche miteinander verbunden und mit demselben Potential beaufschlagt sind.

Es ist es günstig, wenn sich zwei Innenelektroden gegenüber liegen, und der Raum zwischen ihnen mit dem Material der Funktionsschicht gefüllt ist. Es können mehrere solche Innenelektrodensätze nebeneinander in bzw. an der Funktionsschicht angeordnet sein. Die Elektroden eines jeden Satzes können mittels des Kontaktierungsmittels miteinander kontaktiert sein. Auch so können Kapazitäten und Widerstandswerte des Bauelements besonders genau eingestellt werden. Mit einer solchen Konstruktion kann die Funktionsschicht eine Varistorkeramik enthalten und das elektrische Bauelement ein Varistor sein.

Es wird außerdem ein elektrisches Bauelementmodul mit einem keramischen Grundkörper vorgeschlagen, der eine keramische Funktionsschicht und eine keramische Kompositschicht der zuvor und nachfolgend beschriebenen Art sowie mehrere Innenelektrodensätze enthält. Die Innenelektrodensätze sind gemeinsamen in einem einzigen, monolithischen keramischen Grundkörper nebeneinander angeordnet. Jeder Innenelektrodensatz ist vorzugsweise mit einem ihm zugeordneten Außenanschluss verbunden und bildet zusammen mit seinem zugeordneten Außenanschluss und dem keramischen Grundkörper ein elektrisches Bauelement. Durch die mehrfache Anordnung solcher elektrischen Bauelemente in einem einzigen, gemeinsamen Grundkörper kann das dadurch entstehende Bauelement als Bauelementmodul bezeichnet werden.

Es wird bevorzugt, dass Funktions- und Kompositschichten des elektrischen Bauelementmoduls aneinander angrenzen. Dabei können sie übereinander gestapelt sein.

Gemäß einer Ausführungsform des elektrischen Bauelementmoduls kann die Kompositschicht eine Zirkonoxid-Glasfüllstoffmischung enthalten, sodass besonders gutes gemeinsames Sintern mit der Funktionsschicht erreichbar ist.

Gemäß einer Ausführungsform ist zwischen zwei Innenelektroden unterschiedlichen elektrischen Potentials in einer Ebene des elektrischen Bauelements eine Kapazität gebildet. Sofern die Innenelektroden innerhalb der Funktionsschicht angeordnet sind und diese eine Varistorkeramik enthält, wird eine Varistorstrecke zwischen den Innenelektroden gebildet. Insbesondere könnte es sich dabei um eine Varistorstrecke zwischen einer Masseelektrode und einer Innenelektrode, welche über ein Außenkontakt ein dem elektrischen Bauelement zugeführtes Signal erhält, handeln. Eine Masseelektrode einer Funktionsschicht kann an eine andere Innenelektrode derselben Schicht kapazitiv gekoppelt sein. Die Innenelektroden können im Allgemeinen jeweils die Funktion einer Signalleitung aufweisen.

Gemäß einer Ausführungsform weist eine Innenelektrode einer Funktionsschicht einen Schenkel auf, der einer ihr benachbarten Innenelektrode zugewandt ist, wodurch der Abstand und damit die Kapazität zwischen den beiden Innenelektroden in einem Bereich minimiert werden kann. Dies geschieht bei gegebenen Abstand zwischen den Außenkontakten, die die entsprechenden Innenelektroden kontaktieren. Bei gleich bleibender Außenkonstruktion des elektrischen Bauelements bzw. bei den gleichen Kontaktierungsbedingungen mit einer Leiterplatte können dennoch geringere Kapazitäten zwischen den Innenelektroden der Funktionsschicht erreicht werden, ohne die Abstände zwischen den Außenkontakte verändern zu müssen.

Gemäß einer bevorzugten Ausführungsform des elektrischen Bauelements verlaufen die Innenelektroden der Funktionsschicht teilweise ins Innere des elektrischen Bauelements und sind dabei nur an einem Ende mit einem Außenkontakt verbunden. Innenelektroden unterschiedlicher elektrischer Potentialen derselben Funktionsschicht sind dabei bezüglich ihrer Größe vorzugsweise aufeinander abgestimmt. Beispielsweise verläuft eine Masseelektrode einer Funktionsschicht nicht tiefer, zumindest nur geringfügig tiefer oder zumindest nur geringfügig weniger tief ins Innere des elektrischen Bauelements, als eine ihr benachbarte Innenelektrode eines anderen elektrischen Potentials.

Gemäß einer Ausführungsform des elektrischen Bauelements weist auch die Kompositschicht eine Innenelektrode auf. Dies hat den Vorteil, dass die Innenelektrode geringe Streukapazitäten erzeugt, dennoch aber Ströme tragen kann, welche von den Innenelektroden der Funktionsschicht getragen werden. Außerdem können dadurch Kopplungskapazitäten reduziert werden.

Auch kann die zumindest eine Innenelektrode der Kompositschicht die Funktion einer Signalleitung aufweisen, wobei sie dabei eine Masseelektrode bzw. Masseleitung sein könnte, die mit demselben Potential verbunden ist, wie beispielsweise eine Masseelektrode der Funktionsschicht. Die zumindest eine Innenelektrode der Kompositschicht kann vorteilhafterweise die Kopplungskapazität zwischen zwei Innenelektroden der Funktionsschicht reduzieren. Insbesondere kann gemäß einer Ausführungsform des elektrischen Bauelements die zumindest eine Innenelektrode der Kompositschicht die Kopplungskapazität zwischen einer Masseelektrode und einer anderen Innenelektrode der Funktionsschicht reduzieren.

Gemäß einer Ausführungsform des elektrischen Bauelements durchquert die Innenelektrode die Kompositschicht vollständig und ist an jedem Ende mit einem Außenkontakt verbunden.

Jede Innenelektrode des elektrischen Bauelements, unabhängig davon, ob es sich um eine mit der Funktionsschicht oder um eine mit einer Kompositschicht verbundene bzw. in ihr integrierte Innenelektrode handelt, kann eine der folgenden Formen aufweisen: quadratische Form, rechteckige Form, T-Form, L-Form, gekrümmte Form, Mäanderform. Vorzugsweise wird eine Form gewählt, die die Annäherung von Innenelektroden innerhalb der Funktionsschicht erlaubt, wodurch Kapazitäten zwischen ihnen reduziert werden können. Beispielsweise ist es günstig, wenn eine L-förmige Innenelektrode mittels eines ihrer Schenkel einer benachbarten Innenelektroden in derselben Schicht zugewandt ist. Andere zu diesem Zweck nutzbare Innenelektrodenformen sind jedoch ohne Einschränkung verwendbar.

Gemäß einer Ausführungsform des elektrischen Bauelements sind mehrere Innenelektroden einer Funktionsschicht und/oder einer Kompositschicht gleichartig geformt und liegen relativ zueinander in einer spiegelsymmetrischen Anordnung.

Es ist günstig, wenn die Funktionsschicht und/oder die Kompositschicht dotiert ist, beispielsweise um eine genaue Einstellung elektrischer Kennwerte zu ermöglichen.

Die hier beschriebenen Ausführungsformen von elektrischen Bauelementen sind insbesondere als elektrische Filter, beispielsweise zum Einsatz in Computergehäusen oder in Mobiltelefonen und/oder als elektrische Schutzvorrichtungen vor Stoßspannungen bzw. Überspannungen für elektronische Geräte geeignet.

Im Folgenden werden einige Aspekte der Erfindung genannt:
Ein Aspekt betrifft ein elektrisches Bauelement mit einem keramischen Grundkörper, der mehrere keramische Schichten aufweist, wobei
   - eine eine Funktionskeramik enthaltende Funktionsschicht an eine Kompositschicht angrenzt, und
   - die Kompositschicht Zirkonoxid und einen Glasfüllstoff enthält wobei die Dielektrizitätskonstante der Kompositschicht kleiner ist, als die der Funktionsschicht und die Kompositschicht eine elektrische Entkopplungsfunktion aufweist.

Gemäß einem weiteren Aspekt wird ein elektrisches Bauelement nach dem vorhergehenden Aspekt offenbart, bei dem Funktionsschichten und Kompositschichten abwechselnd übereinander gestapelt sind.

Nach einem weiteren Aspekt wird ein elektrisches Bauelement nach einem vorhergehenden Aspekte angegeben, bei dem die Funktionsschicht mehrere Innenelektroden aufweist, die jeweils mit zumindest einem an einer Oberfläche des elektrischen Bauelements angeordneten Außenkontakt verbunden sind.

Nach einem weiteren Aspekt wird ein elektrisches Bauelement nach dem vorhergehenden Aspekt angegeben, bei dem die Innenelektroden jeweils die Funktion einer Signalleitung aufweisen.

Ein weiterer Aspekt betrifft ein elektrisches Bauelement nach einem der beiden vorhergehenden Aspekte, bei dem zumindest eine Innenelektrode eine Masseelektrode ist.

Gemäß einem weiteren Aspekt wird ein elektrisches Bauelement nach einem der drei vorhergehenden Aspekte offenbart, bei dem eine beliebige Innenelektrode mit einem an einer Oberfläche des elektrischen Bauelements angeordneten Außenkontakt des selben elektrischen Potentials verbunden ist.

Gemäß einem weiteren Aspekt wird ein elektrisches Bauelement nach einem der vorhergehenden Aspekte angegeben, bei dem die Kompositschicht zumindest eine Innenelektrode aufweist.

Ein weiterer Aspekt betrifft ein elektrisches Bauelement nach dem vorhergehenden Aspekt, bei dem durch die Kompositschicht eine durch die Innenelektrode der Kompositschicht erzeugte Streukapazität reduzierbar ist.

Ein weiterer Aspekt betrifft ein elektrisches Bauelement nach einem der beiden vorhergehenden Aspekte, bei dem die zumindest eine Innenelektrode der Kompositschicht die Funktion einer Signalleitung aufweist.

Nach einem weiteren Aspekt wird ein elektrisches Bauelement nach einem der drei vorhergehenden Aspekte angegeben, bei dem die zumindest eine Innenelektrode der Kompositschicht eine Masseelektrode ist.

Gemäß einem weiteren Aspekt wird ein elektrisches Bauelement nach einem der vier vorhergehenden Aspekte angegeben, bei dem die zumindest eine Innenelektrode der Kompositschicht die Kopplungskapazität zwischen zwei Innenelektroden der Funktionsschicht reduziert.

Nach einem weiteren Aspekt wird ein elektrisches Bauelement nach nach dem vorhergehenden Aspekt angegeben, bei dem die zumindest eine Innenelektrode der Kompositschicht die Kopplungskapazität zwischen einer Masseelektrode und einer anderen Innenelektrode der Funktionsschicht reduziert.

Gemäß einem weiteren Aspekt wird ein elektrisches Bauelement nach einem der sechs vorhergehenden Aspekte angegeben, bei dem die Innenelektrode der Kompositschicht sie vollständig durchquert und an jedem Ende mit einem Außenkontakt verbunden ist.

Gemäß einem weiteren Aspekt wird ein elektrisches Bauelement nach einem der vorhergehenden Aspekte angegeben, bei dem die Funktionsschicht eine Varistorkeramik oder eine Kondensatorkeramik enthält.

Ein weiterer Aspekt betrifft ein elektrisches Bauelement nach einem der vorhergehenden Aspekte, bei dem mindestens eine Innenelektrode mit der Funktionsschicht verbunden ist, welche mittels eines Kontaktierungsmittels mit einem Außenkontakt an der Oberfläche des elektrischen Bauelements verbunden ist.

Die beschriebenen Gegenstände werden anhand der folgenden Figuren und Ausführungsbeispiele näher erläutert. Dabei zeigen:
- Figuren 1a bis 1d: unterschiedliche Schichtaufbauten eines keramischen Grundkörpers,
- Figur 1e: ein elektrisches Bauelement mit einem keramischen Grundkörper nach einem der Figuren 1a bis 1d, insbesondere nach Figur 1a, mit integrierten Innenelektroden,
- Figuren 2a und 2b: unterschiedliche Perspektiven auf einen Varistor,
- Figur 3a bis 3c: unterschiedliche Perspektiven auf ein elektrisches Bauelementmodul,
- Figur 4: eine Grafik zur Darstellung des Sinterschwunds eines Varistors in Abhängigkeit des Anteils von Glas im Grundkörper,
- Figur 5: eine Grafik zur Darstellung der Verringerung der Kapazität eines Varistors in Abhängigkeit des Anteils von Glas im Grundkörper.
- Figuren 7, 12, 17, 22, 27: perspektivische Darstellungen verschiedener elektrischer Bauelemente in der Form von monolithisch aufgebauten Arrays mit mehreren Außenkontakten,

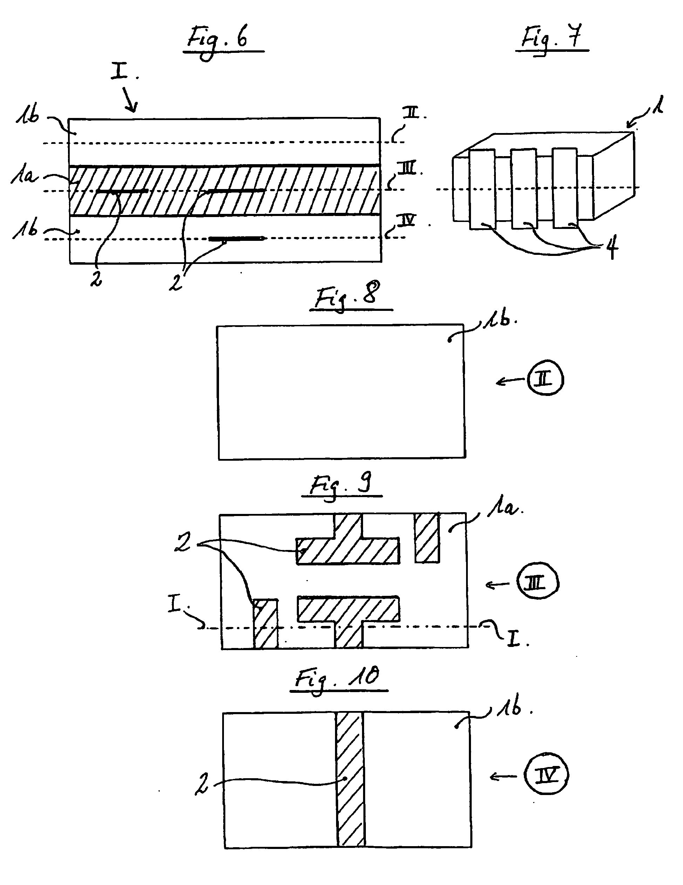

- Figuren 6, 8, 9, 10: Schnittanschichten eines ersten elektrischen Bauelements,

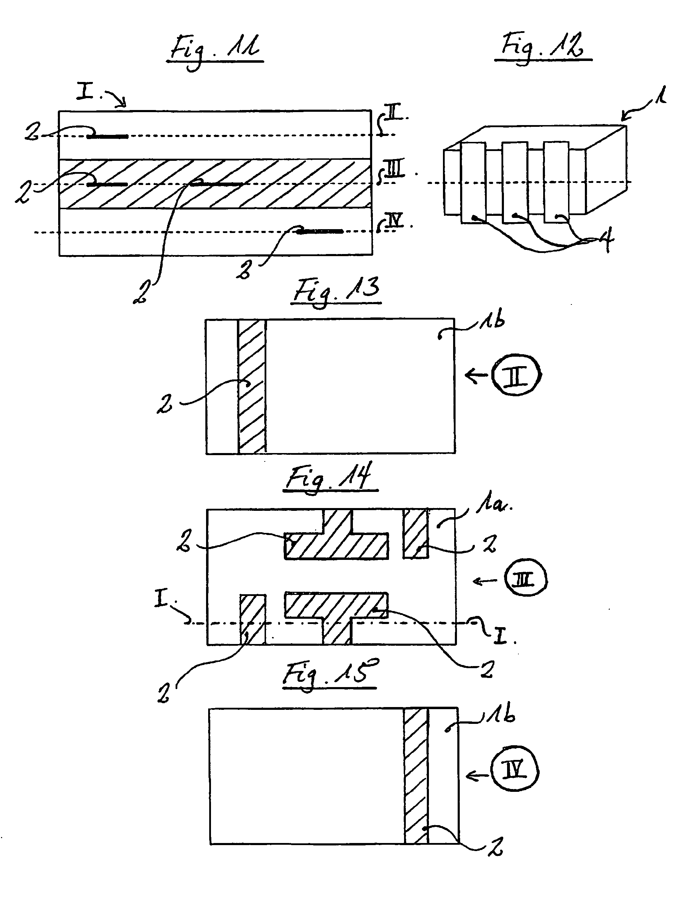

- Figuren 11, 13, 14, 15: Schnittanschichten eines zweiten elektrischen Bauelements,

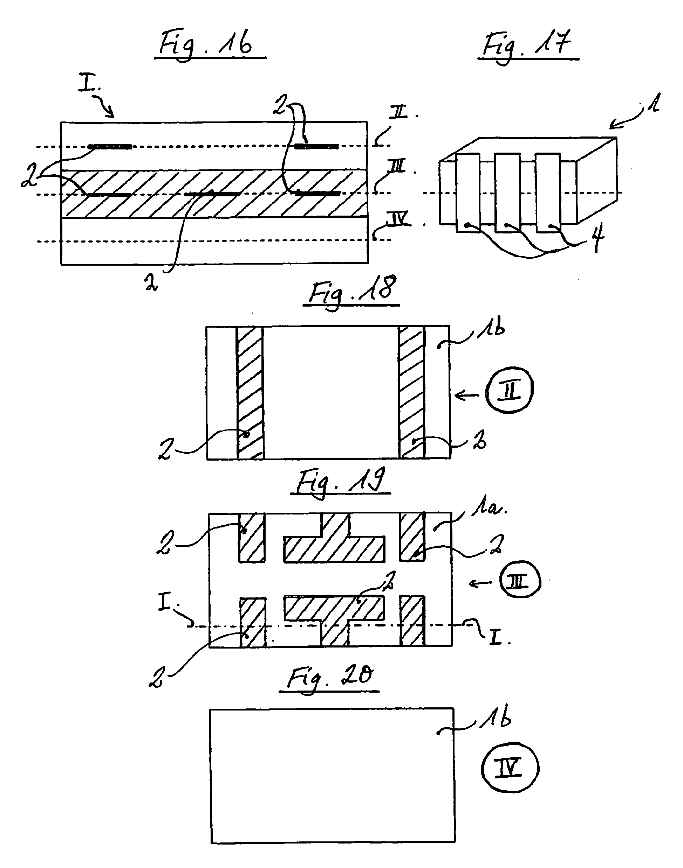

- Figuren 16, 18, 19, 20: Schnittansichten eines dritten elektrischen Bauelements,

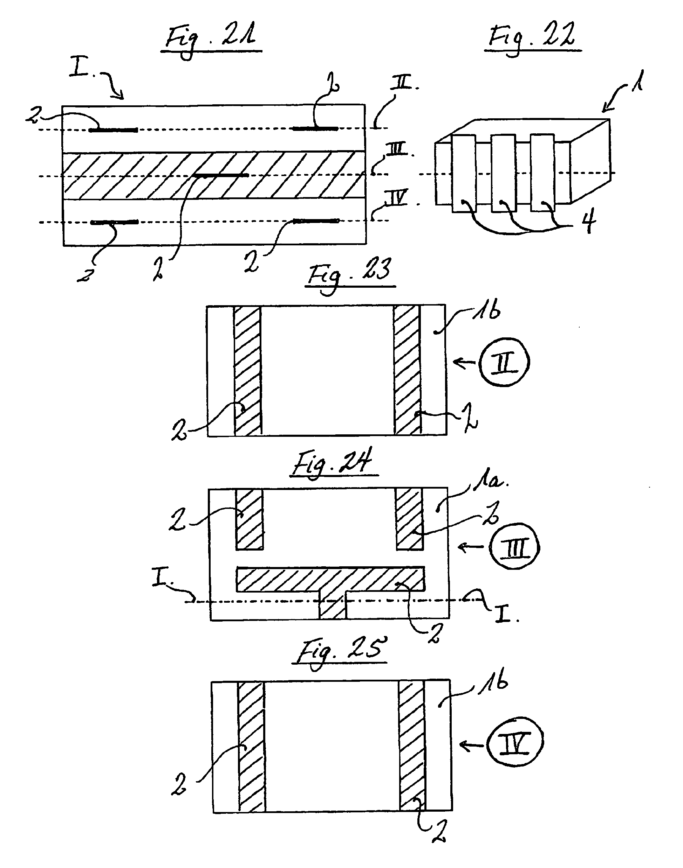

- Figuren 21, 23, 24, 25: Schnittanschichten eines vierten elektrischen Bauelements,

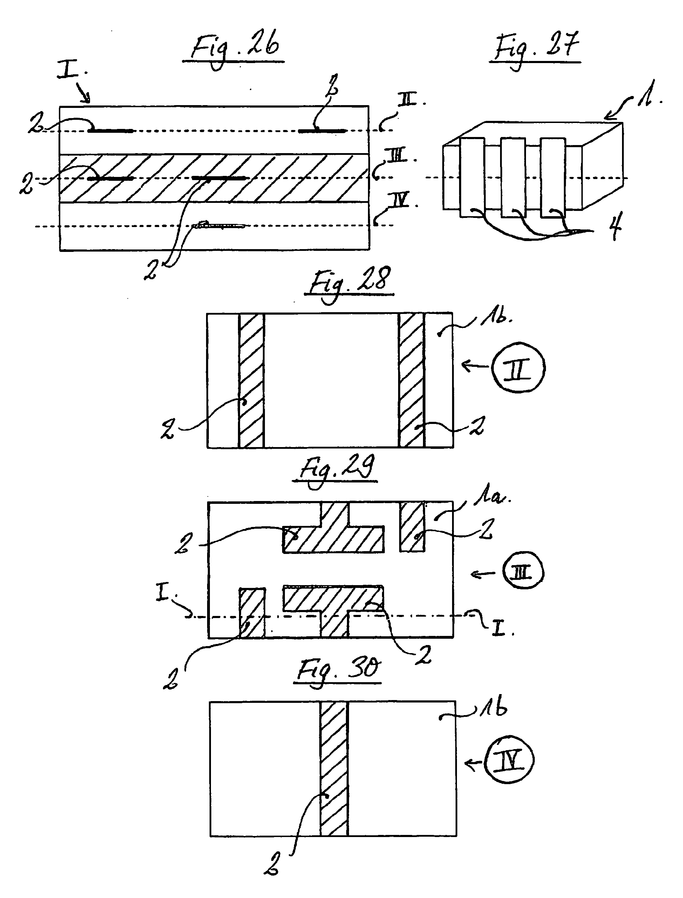

- Figuren 26, 28, 29, 30: Schnittanschichten eines fünften elektrischen Bauelements.

Es wurde ein keramischer Grundkörper getestet, bei dem Zinkoxid als Hauptanteil einer Funktionsschicht und Zirkonoxid als Hauptanteil einer Kompositschicht in abwechselnd gestapelter Weise bereitgestellt waren. Bei der Sinterung des Grundkörpers kam es zur Bildung von Rissen in der Grenzschicht zwischen den beiden Schichten, porösen Grenzschichten oder sogar zum Nichtversintern des Grundkörpers.

Es wurde herausgefunden, dass ein großer Unterschied in der Sintertemperatur und im Sinterschwund von Zinkoxid und anderen, nicht metallischen, anorganischen Keramikmaterialien, wie z.B. Zirkonoxid (ZrO₂-- auch Zirkoniumdioxid genannt), vorlag, und dass dieser Unterschied die gemeinsame Sinterung dieser Keramikmaterialien erschwerte.

Es wurde außerdem herausgefunden, dass mit einer Anreicherung von Zirkonoxid mit einer Glasfüllkomponente sich die oben genannten Effekte vermeiden oder zumindest vermindern ließen. Dabei wurde dem Zirkonoxid eine Glasfüllkomponente in einem Anteil von zwischen 5 und 30 Gew.-% beigemengt, wodurch ein haftender Bereich zwischen den beiden Schichten erzeugt und ein gemeinsames Sintern der beiden Keramikmaterialien bzw. Schichten ermöglicht wurde.

Während des Sintervorgangs wirkte die beigemengte Glasfüllkomponente zudem als Pufferschicht, die die unterschiedlichen Ausdehnungen der Keramiken ausglich. Dabei wurde erkannt, dass bei:
(a) hohen Temperaturen während des Sintervorgangs das verflüssigte Glas Spalten zwischen den verschiedenen Materialien ausfüllt. Dies führt zu einer Glas-Zwischenschicht zwischen der Kompositschicht und der Funktionsschicht. Hierdurch wird die Bildung bzw. der Erhalt von Hohlräumen unterdrückt bzw. verhindert, sodass die elektrischen Kennlinien des Grundkörpers nicht in unerwünschter Weise beeinträchtigt werden. Da das Glas bei höheren Temperaturen noch plastisch ist, kann es durch Verformung Spannungen zwischen den Schichten abbauen.
(b) mittleren Temperaturen das Glas plastisch genug ist, um eine Gleitebene zwischen den unterschiedlichen Schicht entstehen zu lassen. Dadurch wird ein mechanisches Mittel zum Spannungsabbau zwischen den Schichten während des Sintervorgangs geschaffen.
(c) tieferen Temperaturen während des Abkühlvorgangs des Grundkörpers nach der Sinterung, das Glas so stabil ist, dass keine Risse in der Kompositschicht auftreten.

Die Kompositschicht senkt mit einer geringeren Dielektrizitätskonstante die Streukapazität des Grundkörpers.

Es wird eine Kompositschicht vorgeschlagen, die ein Gemisch aus einer Glasfüllkomponente und Zirkonoxid darstellt, wobei Glas in einem Anteil von vorzugsweise zwischen 5 und 30% Gew.-% vorhanden ist. Der übrige Anteil ist überwiegend dem Zirkonoxid und in geringerem Maße der Organik zuzuordnen. Diese Schicht kann je nach Anwendung und gewünschter Kapazität bzw. Leitfähigkeit mittels Mg, Sb, B oder Al dotiert sein.

Die Glasfüllkomponente enthält vorzugsweise Zinkborsilikat oder Aluminiumsilikat. Es hat sich herausgestellt, dass diese Silikate mit Zirkonoxid und mit Zinkoxid gut verträglich sind und daher die elektrischen Eigenschaften der Komposit- und der Funktionsschichten nicht oder zumindest nur wenig durch chemische Reaktion beeinflusst werden. Folgende Materialien bzw. Zusammensetzung kommen aber auch in Betracht:
Na₂O.Al₂O₃.B₂O₃.SiO₂, Na₂O.BaO.SᵢO₂, 2nO.B₂O₃.SiO₂, SiO₂.BaO.B₂O₃, Bi₂O₃.B₂O₃, B₂O₃.ZnO.Bi₂O₃, B₂O₃.2nO, SiO₂.B₂O₃.ZnO, B₂O₃.ZnO, SiO₂.B₂O₃.ZnO.

Aufgrund ihrer Zusammensetzung mit Zirkonoxid weist die Kompositschicht eine besonders hohe thermische Beständigkeit auf. Somit hat die Verwendung einer solchen Kompositschicht den Vorteil, dass der Varistor nicht aufplatzt, wenn er mit Stoßströmen bzw. hohen Spannung beaufschlagt wird, die den Varistor schlagartig aufheizen. Dies trifft insbesondere dann zu, wenn die Kompositschicht als Deckschicht eines Grundkörpers realisiert ist.

Die Funktionskeramik kann dagegen eine Varistorkeramik umfassen, wodurch der Grundkörper zum Grundkörper eines Varistors wird. Die Varistorkeramik enthält vorzugsweise Zinkoxid, und kann mittels Dotierstoffen wie beispielsweise Bi, Pr, oder Sb dotiert sein, um die Permittivität der Varistorkeramik zu steigern oder zu senken. Die Funktionskeramik kann jedoch ein anderes Material enthalten, das beispielsweise für einen keramischen Vielschichtkondensator oder für ein NTC- oder PTC-Bauelement geeignet wäre.

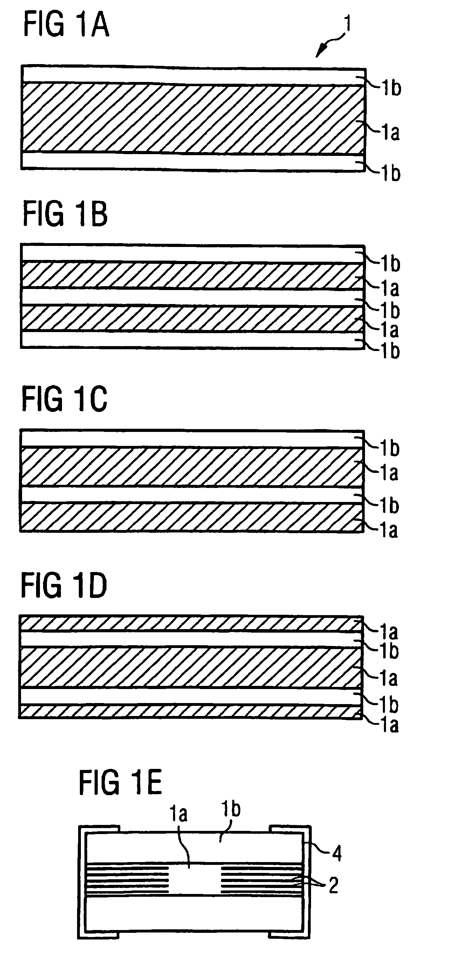

Figuren 1a bis 1d zeigen einen Grundkörper 1 eines elektrischen Bauelements, bei dem eine erste Schicht 1a eine Funktionsschicht ist, eine Funktionskeramik enthält und jeweils ober- und unterseitig an eine Kompositschicht 1b angrenzt, die vorzugsweise eine geringere Dielektrizitätskonstante aufweist, als die erste Schicht. Die Kompositschicht ist vorzugsweise eine Passivierungsschicht. Die unterschiedlichen Schichten sind abwechselnd übereinander angeordnet und bilden zusammen eine Sandwichstruktur.

Figur 1a zeigt, wie die Funktionsschicht 1a zwischen zwei Schichten mit geringerer Dielektritätskonstante angeordnet ist.

Figur 1b zeigt einen Grundkörper mit zwei Funktionsschichten 1a, die jeweils ober- und unterseitig an eine Kompositschicht 1b mit geringerer Dielektritätskonstante angrenzen.

Figur 1c zeigt ein Grundkörper gemäß Figur 1b, bei dem jedoch die unterste Kompositschicht 1b fehlt und stattdessen eine Funktionsschicht 1a den Boden des Grundkörpers bildet.

Figur 1d zeigt ein Grundkörper, bei dem zwei Kompositschichten 1b jeweils ober- und unterseitig an eine Funktionsschicht 1a angrenzen. Dabei bilden Funktionsschichten jeweils die Oberseite und den Boden des Grundkörpers.

Figur 1e zeigt einen keramischen Grundkörper der mit Außenkontaktierungen 4 versehen ist, die seine Seitenflanken abdecken. Eine solche Außenkontaktierung 4 kann in gleicher Weise an die Grundkörper, wie sie in den Figuren 1a bis 1d vorgestellt wurden, angebracht werden. Außer den Außenkontaktierungen 4 können in jedem Grundkörper Elektroden 2 angeordnet werden. Dabei wird bevorzugt, dass Zuleitungen bzw. die Elektroden in einer Funktionsschicht 1a eingebettet sind. Es ist jedoch auch möglich, die Zuleitungen zumindest teilweise in der Kompositschicht 1b anzuordnen, in der die Kopplungskapazitäten aufgrund der Entkopplungseigenschaft der Kompositschicht zwischen mehreren Zuleitungen gering gehalten werden können.

Der Herstellungsvorgang des Grundkörpers läuft vorzugsweise folgendermaßen ab:
1. Für die Kompositschicht wird eine Mischung von vorzugsweise dotiertem Zirkonoxid, am besten als pulverisierte Masse, bereitgestellt. Dieser Mischung wird ein Glasfüllstoff in einem Anteil von 5 bis 70 Gew.-%, vorzugsweise jedoch in einem Anteil von 5 bis 30 Gew.-%, beigemengt. Für die Funktionsschicht kann in analoger Weise eine vorzugsweise dotierte keramische Mischung aus Zinkoxid oder anderem geeigneten Material bereitgestellt werden.
2. Die Pulvermassen werden mittels eines Binders zu Grünfolien mit einem Mindestmaß an Zusammenhalt geformt und anschließend getrocknet. Der Binder kann dabei Wasser und organisches Material enthalten.
3. Die getrockneten Grünfolien werden je nach Bedarf übereinander gestapelt um einen vielschichtigen, grünen Grundkörper zu erhalten.
4. Wenn nötig werden Elektroden und Kontaktierungsmittel auf die keramische Schichten aufgedruckt bzw. in die keramische Schichten eingeführt. Vorzugsweise werden die Elektroden mittels Dünnschichttechnik oder mittels Siebdrucken stapelweise oder in kammartig ineinander greifender Weise auf die gewünschten Schichten aufgebracht. Geeignete Elektrodenmaterialien sind beispielsweise Nickel oder Kupfer.
5. Der Grünkörper wird in einer reduzierten oder nichtreduzierten Atmosphäre gesintert, wobei der Binder, insbesondere seine organischen Bestandteile, verflüchtigt. Die Glasfüllkomponente bildet durch den Sintervorgang eine Pufferschicht zwischen den unterschiedlichen keramischen Schichten, sodass diese ohne Bildung von Rissen untereinander gesintert werden können.
5a. Bei der Sinterung des grünen Grundkörpers (mit oder ohne Elektroden bzw. Kontaktierungsmittel) kann folgendes erstes Profil verwendet werden, bei dem organische Bestandteile der keramischen Schichten verflüchtigen können:
   - Aufheizen des grünen Grundkörpers auf 100°C in Schritten von 5°C pro Minute,
   - Weiteres Aufheizen auf 450°C in Schritten von 0,2 bis 0,5°C pro Minute,
   - Weiteres Aufheizen auf 880°C in Schritten von 5 bis 10°C pro Minute,
   - Verbleib bei 880°C für 15 Minuten bis 1 Stunde.
   - Kühlung des Grundkörpers bei -5 bis -15°C bis auf Raumtemperatur.
5b. Für einen anschließenden Sintervorgang kann folgendes, zweites Profil verwendet werden, bei dem die keramischen Schichten des Grundkörpers gemeinsamen gesintert werden:
   - Aufheizen des grünen Grundkörpers auf 1000 bis 1100°C in Schritten von 1 bis 4°C pro Minute.
   - Verbleib bei 1000 bis 1100°C für 180 bis 240 Minuten,
   - Kühlung des Grundkörpers bei -1 bis -4°C auf Raumtemperatur.
5c. Die Sinterprofile können in Abhängigkeit der Schmelztemperatur der gegebenenfalls im Grundkörper vorhandenen Elektroden bzw. Kontaktierungsmittel ausgesucht werden. Dabei wird vorzugsweise eine Sintertemperatur gewählt, welche Unterhalb der Schmelztemperatur der Elektroden bzw. Kontaktierungsmittel liegt.
6. Der so erhaltene, gesinterte Grundkörper wird vorzugsweise großflächig mit einer metallischen Außenkontaktierungsschicht versehen. Dieser Schritt kann jedoch auch nach der Vereinzelung des Grundkörpers (Schritt 7) ausgeführt werden.
7. Je nach Anwendung kann der gesinterte Grundkörper, vor oder nachdem er eine Außenkontaktierungsschicht erhalten hat, vereinzelt werden. Beispielsweise wird der Grundkörper nach einem Raster, definiert durch Einheiten von mehreren, nebeneinander angeordneten Elektrodenstapeln, vereinzelt. Nach der Vereinzelung würden sich dadurch Module, bestehend aus mehreren Sätzen von Innenelektroden, ergeben, wobei die Innenelektrodensätze jeweils zusammen mit einer Außenkontaktierung die Funktion eines einzelnen elektrischen Bauelements, beispielsweise Varistors, ergeben würden. Ein solches Modul kann, wenn es im vorherigen Schritt noch keine Außenkontaktierung erhalten hat, nun in einem gewünschten Muster eine Außenkontaktierung erhalten.

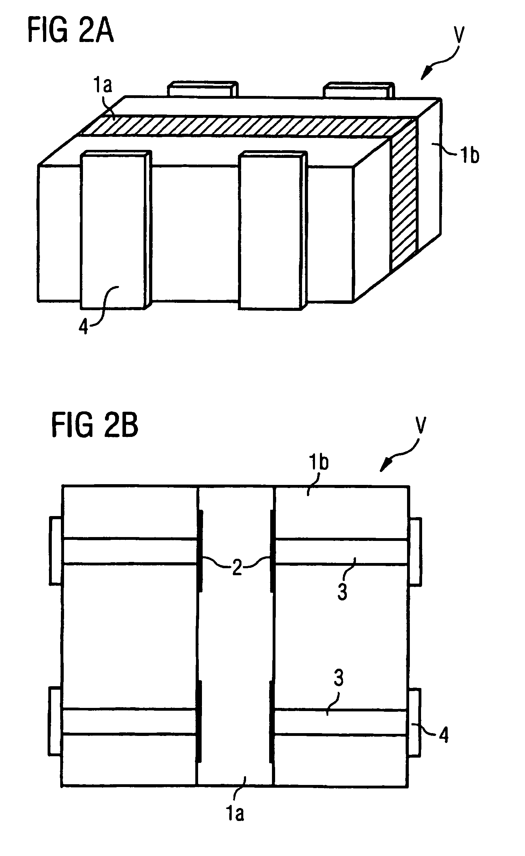

Figur 2a zeigt in perspektivischer Ansicht einen Varistor V mit zwei Außenkontakten 4 und einem monolithischen keramischen Grundkörper 1, der aus unterschiedlichen keramischen Schichten 1a und 1b besteht. Der Varistor ist vorzugsweise ein SMD-Varistor mit niedriger Kapazität von weniger als 1 pF.

Eine Draufsicht einer mit der gestrichelten Linie gekennzeichneten Ebene dieses Varistors V wird mit der Figur 2b gezeigt. Es sind mehrere, vorzugsweise vier Innenelektroden 2 in der Funktionsschicht 1a angeordnet, welche mittels Kontaktierungsmittel 3 mit jeweils diesen Elektroden zugeordneten Außenkontakten 4 kontaktiert werden können.

Die genannten vier Innenelektroden 2 sind vorzugsweise auf einer Seite flächig mit der Kompositschicht 1b verbunden, auf der anderen Seite jedoch in der Funktionsschicht 1a eingebettet. In dieser Weise sind zwei Paare von Innenelektroden 2 im Grundkörper angeordnet, wobei für jedes Paar eine erste Innenelektrode gegenüber der zweiten Innenelektrode liegt und der Raum zwischen diesen Innenelektroden eines Innenelektrodenpaars durch die Funktionsschicht 1a gefüllt ist.

Innerhalb der Funktionsschicht können jedoch noch weitere Innenelektroden angeordnet sein, sodass mehrere Innenelektrodensätze mit mehr als zwei Innenelektroden pro Satz gebildet werden. Die Innenelektroden eines Satzes können dabei mittels des Kontaktierungsmittels 3 miteinander verschaltet werden.

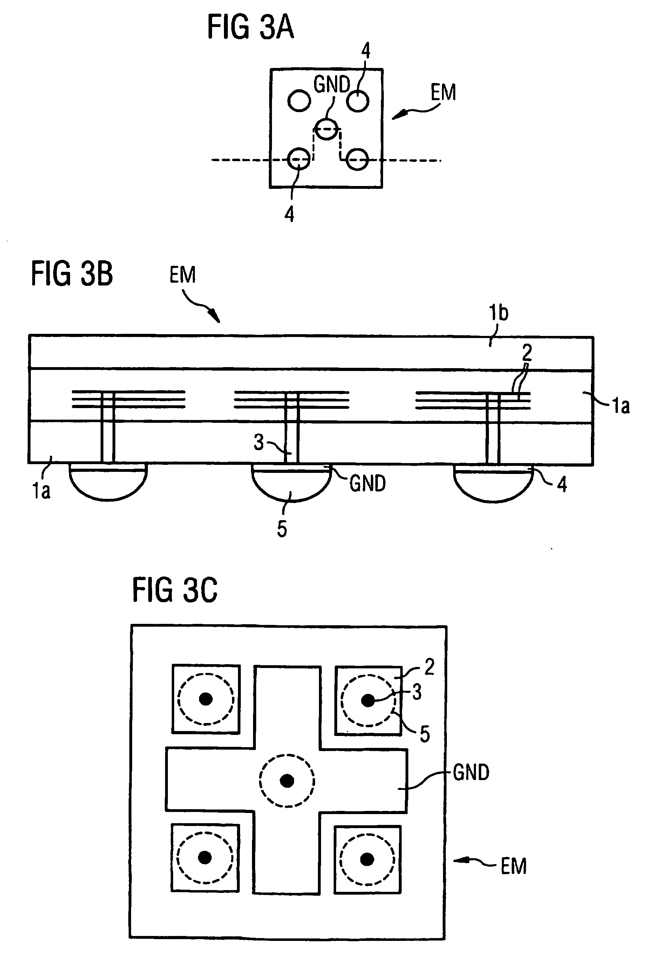

Ein Beispiel eines Kontaktierungsmittels zur Kontaktierung einer oder mehrerer Innenelektroden mit einem Außenkontakt wäre eine metallische Durchkontaktierung 3, die vorzugsweise mit Silber, Silber-Palladium, Silber-Platin, oder schlicht Platin befüllt sein kann. Jede Durchkontaktierung verläuft dabei zumindest teilweise durch die Kompositschicht 1b, sodass die Kopplungskapazitäten unter mehreren Durchkontaktierungen im Bauelement erheblich reduziert werden können. Figuren 3a bis 3c zeigen zusammen ein elektrisches Bauelementmodul aus unterschiedlichen Perspektiven. Das Bauelementmodul umfasst einen keramischen Grundkörper, der mehrere keramische Schichten aus unterschiedlichen Materialien aufweist, unter denen eine Funktionsschicht an eine Kompositschicht angrenzt und mehrere Innenelektrodensätze im gemeinsamen keramischen Grundkörper nebeneinander angeordnet sind. Es wird bevorzugt, dass die Kompositschicht eine niedrigere Dielektrizitätskonstante aufweist als die Funktionsschicht, und dass die Kompositschicht eine Zirkonoxid-Glasfüllstoffmischung enthält, damit der keramische Grundkörper besonders gut in einen monolithischen Körper sinterbar ist.

Wenn als Funktionsschicht eine Varistorkeramik verwendet wird, kann das elektrische Bauelementmodul als Varistormodul bezeichnet werden. Analoges gilt für die Verwendung der eingangs Art genannten, alternativen Keramikmaterialien.

Figur 3a zeigt wie die Oberfläche des Grundkörpers mit Außenkontakten 4 in gleichmäßiger, vorzugsweise rechteckiger Anordnung versehen ist. Die Oberfläche ist vorzugsweise die Unterseite des Grundkörpers, die bei der Montage des Bauelements auf eine Leiterplatte ihr zugewandt sein wird.

Ebenfalls an der genannten Oberfläche des Grundkörpers ist im Zentrum der Anordnung von Außenkontakten ein gemeinsamer Massenkontakt GND angeordnet. Jeder Außenkontakt kann mit einer Lotkugel 5 versehen werden.

Figur 3b zeigt eine Schnittansicht des mit der Draufsicht gezeigten elektrischen Bauelementmoduls EM aus Figur 3a, wobei der Schnitt dem Verlauf der in Figur 3a gezeigten, gestrichelt gestuften Linie entspricht. Mit jedem Außenkontakt 4 oder GND ist eine vorzugsweise teilweise durch die Kompositschicht 1b verlaufende Durchkontaktierung 3 verbunden, welche ihrerseits eine oder mehrere Innenelektroden 2 kontaktiert. Mittels der Durchkontaktierung können diese miteinander verschaltet werden. Es werden mehrere Innenelektrodensätze, bestehend jeweils aus drei Innenelektroden 2, gezeigt, wobei die einzelnen Innenelektroden in einer einzigen Funktionsschicht 1a eingebettet sind. Jeder Innenelektrodensatz, dessen Innenelektroden mittels einer Durchkontaktierung 3 mit einem Außenkontakt 4 kontaktiert sind, bildet zusammen mit den keramischen Schichten ein elektrisches Bauelement, sodass mehrere elektrische Bauelemente in einem gemeinsamen Grundkörper nebeneinander angeordnet sein können. Wenn dabei die Funktionsschicht eine Varistorkeramik enthält, kann ein Varistormodul geschaffen werden. Wenn alternativ eine Kondensatorkeramik als Funktionsschicht verwendet wird, die Innenelektrodensätze sich gegenseitig mit ihren einzelnen Innenelektroden kammartig überlappen und gegenpolig beladen sind, kann ein keramischer Vielschichtkondensator geschaffen werden. Dabei können mehrere Sätze von überlappenden Innenelektroden, die unmittelbar mit einem Außenkontakt oder mittelbar über ein Kontaktierungsmittel mit einem Außenkontakt verbunden sind, zusammen mit dem gemeinsamen keramischen Grundkörper eine Anordnung von mehreren Kondensatoren ergeben, die zu einem keramischen Kondensatormodul zusammengefasst sind.

Somit sind im Varistormodul bzw. Kondensatormodul insgesamt 5 Varistoren bzw. Kondensatoren mit einem gemeinsamen, monolithischen Grundkörper enthalten, wobei ein Varistor bzw. Kondensator einen Außenkontakt in der Form einer unter allen Varistoren bzw. Kondensatoren gemeinsamen Masse GND aufweist.

Figur 3c zeigt eine Sicht von oben durch das elektrische Bauelementmodul EM hindurch. Es wird ein kreuzförmiger Außenanschluss für die Masse GND gezeigt, der an der Unterseite des Bauelementmoduls angeordnet ist. An derselben Unterseite sind neben dieser kreuzförmigen Masseelektrode GND die Außenkontakte 4 (zusammen mit den Lotkugeln 5) der Varistoren bzw. Kondensatoren in symmetrischer Weise angeordnet. Die gestrichelten Kreise in der Figur zeigen die Umrisse der Lotkugeln 5, die vier Quadrate die Querschnitte der Innenelektroden 2 und die gefüllten, kleineren Kreise die Querschnitt der Durchkontaktierungen 3 eines jeden Varistors bzw. Kondensators. Da die Außenkontakte 4 einen Querschnitt aufweisen, der mit dem der Lotkugeln deckungsgleich ist, sind die Außenkontakte in dieser Figur nicht dargestellt.

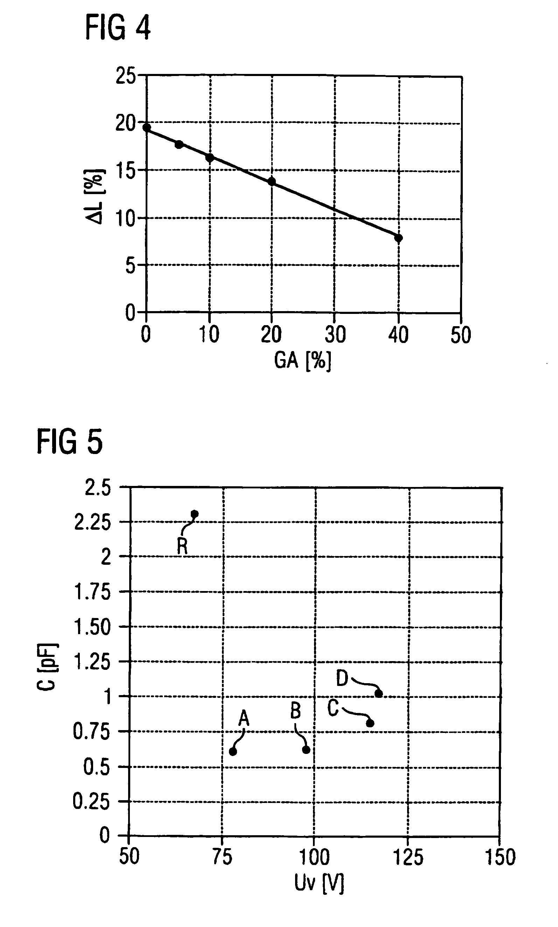

Figur 4 zeigt eine Grafik zur Darstellung des Sinterschwunds AL eines vielschichtigen keramischen Grundkörpers mit zwei Kompositschichten und eine dazwischen liegende Funktionsschicht in Abhängigkeit des Glasfüllstoffanteils GA in der Kompositschicht 1b. Ohne Zusatz von Glasfüllstoff in der Kompositschicht ergibt sich durch die Sinterung des keramischen Grundkörpers ein Sinterwund, gemessen anhand Vergrößerung der lateralen Ausdehnung des Grundkörpers, von nahezu 20%. Der Sinterschwund verringert sich in nahezu linearer Weise, je mehr Glasfüllstoff der Kompositschicht beigemengt ist. Bei einem Glasfüllstoffgehalt von 40 Gew.-% ergab sich nur noch ein Sinterschwund des keramischen Grundkörpers von ca. 9%.

Figur 5 zeigt eine schematische Grafik, die einen Vergleich der Kapazität mehrerer Varistoren A bis D mit unterschiedlichen Glasfüllstoffanteilen in einer Zirkonoxid enthaltenden Kompositschicht (Z-G Wert) im Gegensatz zu einem Referenzvaristor R ohne Glasstoffanteil darstellt. Alle keramischen Körper der Varistoren wurden bei ca. 1000°C gesintert. Die Varistoren weisen jeweils Elektrodenstapel auf, wobei verschiedene Varistoren mit unterschiedlichen Elektrodenabständen getestet wurden. Diese Abstände verringerten sich nach der Sinterung der keramischen Grundkörper um bis zu 0,4 mm. Wenn ursprünglich der Abstand zwischen den Elektroden also beispielsweise bei 0,12 mm lag, kann der tatsächliche Abstand nach der Sinterung bei ca. 0,08 mm liegen.

Beim Referenzvaristor R beträgt der Z-G Wert 0%. Seine Kapazität liegt bei einer Spannung von ca. 68 V bei 2,3 pF.

Für Varistor A beträgt der Z-G Wert 60%, sodass seine Kapazität bei ungefähr 0,6 pF liegt.

Für Varistor B beträgt der Z-G Wert 40% sodass seine Kapazität bei veränderten Spannungsverhältnissen auch bei ungefähr 0,6 pF liegt.

Für Varistor C beträgt der Z-G Wert 20%. Bei einer Spannung von ca. 115 V hat er eine Kapazität von ungefähr 0,78 pF.

Für Varistor D beträgt der Z-G Wert 5%. Bei einer Spannung von ca. 116 V hat er eine Kapazität von ungefähr 1 pF.

Im Allgemeinen ist erkennbar, dass je mehr Glasfüllstoff in der Zirkonmischung enthalten ist, desto geringer die Kapazität wird.

Im Rahmen dieses Dokuments, insbesondere aller genannten Ausführungsformen des elektrischen Bauelements sollen Funktionsschichten dotiert sein können, beispielsweise mittels Bi, Pr oder Sb. Dabei kann eine Keramik der Funktionsschicht, beispielsweise eine Varistorkeramik, mit diesen Materialien dotiert sein. Kompositschichten können ebenfalls dotiert sein, beispielsweise mittels Mg, Sb, B oder Al. Dabei kann insbesondere die Zirkonoxid-Glasmischung mittels dieser Materialien dotiert sein.

Figur 6 zeigt eine Schnittansicht eines elektrischen Bauelements 1 in einem Schnitt I. (dessen Position in der Figur 9 gezeigt wird). Mittels der Schnittansicht werden mehrere, insbesondere 3 Schichten unterschiedlicher Zusammensetzung in übereinander laminierter bzw. gestapelter Weise gezeigt. Es werden Ebenen II., III. und IV. gezeigt, wobei sich die Ebene II. in einer obersten Kompositschicht 1b, die Ebene III. in einer mittleren Funktionsschicht 1a und die Ebene IV. sich in einer untersten, zweiten Kompositschicht 1b befindet. Schnitte von zwei in einer Ebene liegenden Innenelektroden 2 innerhalb der Funktionsschicht 1a und ein Schnitt einer Innenelektrode innerhalb der untersten Kompositschicht 1b werden gezeigt. Zumindest ein Teil der Innenelektrode 2 der untersten Kompositschicht 1b liegt in orthogonaler Projektion direkt unterhalb der mittleren Innenelektrode 2 der Funktionsschicht 1a.

Figur 7 ist eine perspektivische Darstellung eines elektrischen Bauelements, einige dessen Schnitte mittels der Figuren 6, 8, 9 und 10 gezeigt werden. Es werden an einer seitlichen Oberfläche bzw. an einer Seitenfläche des elektrischen Bauelements angeordnete mehrere Außenkontakte 4, insbesondere 3 Außenkontakte, gezeigt. Diese können jeweils mehrere, insbesondere auch übereinander angeordnete Innenelektroden desselben elektrischen Potentials kontaktieren. Es kann eine gleiche Anzahl von Außenkontakten an der gegenüberliegenden Seitefläche des elektrischen Bauelements angeordnet sein. Auch können Außenkontakte an einer senkrecht zur Seitenfläche mit den gezeigten Außenkontakten verlaufenden Stirnfläche angeordnet sein.

Figur 8 zeigt die mit der Figur 6 vorgestellte Ebene II. der obersten Kompositschicht 1b, welche keine Innenelektroden aufweist. Die Kompositschicht besteht aus einer Zirkonoxid-Glasfüllstoffmischung.

Figur 9 zeigt die mit der Figur 6 vorgestellte Ebene III. der Funktionsschicht 1a, wodurch die flächigen Ausmaße bzw. Geometrien der sich in dieser Schicht in der Ebene III. befindlichen Innenelektroden 2 darstellbar gemacht werden. Es liegen sich zwei T-förmige Innenelektroden symmetrisch gegenüber, wobei eine erste Symmetrieachse zwischen diesen Innenelektroden entlang ihrer Stirnflächen und eine zweite Symmetrieachse durch die Stämme der jeweiligen T-förmigen Innenelektroden verläuft. Das Fußende eines Stamms einer jeden T-förmigen Innenelektrode ist an die Oberfläche des elektrischen Bauelements bzw. der Funktionsschicht herangeführt und kann daher bzw. ist mit einem Außenkontakt, beispielsweise wie mit der Figur 7 gezeigt, kontaktiert. Die T-förmigen Elektroden sind als Masseelektroden bzw. als Masseleitungen ausgeführt, welche mit einer Masse verbunden sind und Signale bestimmter Frequenzen ableiten können. Neben einer jeden T-förmigen Innenelektrode ist eine längliche, rechteckige Innenelektroden angeordnet, deren ein Ende an die Oberfläche des elektrischen Bauelements herangeführt und mit einem Außenkontakt 4 kontaktierbar ist. Das andere Ende der Innenelektrode ist dem Inneren des Bauelements zugewandt und endet dort. Die Länge der Innenelektrode entspricht der Länge der T-förmigen Elektrode. Die rechteckige Innenelektroden sind als Signalleitungen zur Leitung von Signalen, beispielsweise Funksignalen, ausgeführt und jeweils kapazitiv an die neben ihnen angeordnete Masseelektrode gekoppelt, deren Funktion als Signal-Ableiter oberhalb eines bestimmten Ansprechstroms bzw. Ansprechspannung aktiviert wird. Sofern die Funktionsschicht eine Varistorkeramik der beschriebenen Art aufweist, wird eine Varsitorstrecke zwischen jeder T-förmigen Masseelektrode und einer ihr in derselben Ebene benachbarten rechteckigen Innenelektrode erzeugt. Die Varistorstrecke ermöglicht es, beispielsweise Stoßströme bzw. Überspannungen und Signale unterhalb, innerhalb oder oberhalb eines bestimmten Frequenzbereiches kontrolliert zu überbrücken und von den Masseelektroden ableiten zu lassen.

Mittels ihrer T-förmigen Form kann die Kopplungskapazität zwischen dieser Innenelektrode und der in derselben Ebene benachbarten, länglichen rechteckigen Innenelektrode reduziert werden. Anstelle der T-Form sind jedoch auch andere Formen denkbar, insbesondere solche, welche es ermöglichen, die Abstände zwischen den Grenzen benachbarter Innenelektroden unterschiedlichen Potentials innerhalb einer Ebene zu reduzieren. Eine L-Form kommt dabei in Betracht.

Figur 10 zeigt die mit der Figur 6 vorgestellte Ebene IV. der untersten Kompositschicht 1b. Die Kompositschicht weist eine Innenelektrode 2 auf, welche als Signalleitung bzw. als Masseleitung quer durch die Ebene IV. verläuft und an jeder ihrer Enden mit einem Außenkontakt 4 verbunden ist. Dabei werden dieselben Außenkontakte kontaktiert, die mit den T-förmigen Innenelektroden 2 der Funktionsschicht 1a verbunden sind. Ein durch die T-förmigen Innenelektroden der Funktionsschicht getragener Strom wird also von der Masseleitung der untersten Kompositschicht 1b mit geringer Streukapazität mitgetragen.

Figur 11 zeigt eine Schnittansicht eines anderen elektrischen Bauelements 1 in einem Schnitt I. (dessen Position in der Figur 14 gezeigt wird). Mittels der Schnittansicht werden mehrere, insbesondere 3 Schichten unterschiedlicher Zusammensetzung in übereinander laminierter bzw. gestapelter Weise gezeigt. Es werden Ebenen II., III. und IV. gezeigt, wobei sich die Ebene II. in einer obersten Kompositschicht 1b, die Ebene III. in einer mittleren Funktionsschicht 1a und die Ebene IV. sich in einer untersten, zweiten Kompositschicht 1b befindet. Schnitte von zwei in einer Ebene liegenden Innenelektroden 2 innerhalb der Funktionsschicht 1a, ein Schnitt einer Innenelektrode 2 innerhalb der obersten Kompositschicht 1b sowie ein Schnitt einer Innenelektrode 2 einer untersten Kompositschicht 1b werden gezeigt. Zumindest ein Teil der Innenelektrode 2 der obersten Kompositschicht 1b liegt in orthogonaler Projektion direkt oberhalb der linken, rechteckigen Innenelektrode 2 der Funktionsschicht 1a. Zumindest ein Teil der Innenelektrode 2 der untersten Kompositschicht 1b liegt in orthogonaler Projektion direkt unterhalb der rechten, rechteckigen Innenelektrode 2 der Funktionsschicht 1a.

Figur 12 ist eine perspektivische Darstellung eines elektrischen Bauelements, einige dessen Schnitte mittels der Figuren 11, 13, 14 und 15 gezeigt werden. Es können Außenkontakte 4, wie mit der Figur 7 bereits beschrieben, ausgebildet sein.

Figur 13 zeigt die mit der Figur 11 vorgestellte Ebene II. der obersten Kompositschicht 1b, welche eine Innenelektrode bzw. Signalleitung 2 in ihrer linken Hälfte aufweist, welche die Ebene gänzlich durchquert und an je einem Ende mit einem Außenkontakt 4 desselben elektrischen Potentials kontaktiert ist. Die Kompositschicht besteht aus einer Zirkonoxid-Glasfüllstoffmischung.

Figur 14 zeigt die mit der Figur 11 vorgestellte Ebene III. der Funktionsschicht 1a. Es liegen sich wieder zwei T-förmige Innenelektroden symmetrisch gegenüber in einer der Figur 9 sowie der zugehörigen Beschreibung entsprechenden Weise. Auch hier sind die T-förmigen Elektroden als Masseelektroden bzw. als Masseleitungen ausgeführt, welche mit einer Masse verbunden sind und Signale bestimmter Frequenzen ableiten können. Neben einer jeden T-förmigen Innenelektrode ist eine längliche, rechteckige Innenelektrode in einer der Figur 9 sowie der dazugehörigen Beschreibung entsprechenden Weise angeordnet. Die Funktionen der T-förmigen Innenelektroden, der rechteckigen Innenelektroden sowie deren Wechselwirkungen im Sinne einer Signalableitung entsprechen der Beschreibung zu Figur 9. Die linke Innenelektrode 2 der Funktionsschicht 1a wirkt jedoch mit der Signalleitung 2 der Kompositschicht derart zusammen, dass ein mit geringer Streukapazität durch die linke, rechteckige Innenelektrode 2 der Funktionsschicht 1a getragener Strom auch von der Signalleitung der Funktionsschicht 1a mitgetragen wird.

Figur 15 zeigt die mit der Figur 11 vorgestellte Ebene IV. der untersten Kompositschicht 1b. Die Kompositschicht weist eine Innenelektrode 2 auf, welche als Signalleitung quer durch die Ebene IV. verläuft und an jeder ihrer Enden mit einem Außenkontakt 4 verbunden ist. Dabei wird einer derselben Außenkontakte kontaktiert, die mit der rechten Innenelektrode 2 der Funktionsschicht 1a verbunden ist. Ein durch die rechte, rechteckige Innenelektrode 2 der Funktionsschicht 1a getragener Strom wird also von der Signalleitung der untersten Kompositschicht 1b mit geringer Streukapazität mitgetragen.

Figur 16 zeigt eine Schnittansicht eines anderen elektrischen Bauelements 1 in einem Schnitt I. (dessen Position in der Figur 19 gezeigt wird). Schnitte von drei in einer Ebene III. liegenden Innenelektroden 2 innerhalb der Funktionsschicht 1a sowie Schnitte von zwei Innenelektroden 2 innerhalb der obersten Kompositschicht 1b werden gezeigt. Die unterste Kompositschicht 1b weist keine Innenelektroden auf.

Figur 17 ist eine perspektivische Darstellung eines elektrischen Bauelements, einige dessen Schnitte mittels der Figuren 16, 18, 19 und 20 gezeigt werden. Das elektrische Bauelement kann mit Außenkontakten 4, wie mit der Figur 7 bereits beschrieben, ausgebildet sein.

Figur 18 zeigt die mit der Figur 16 vorgestellte Ebene II. der obersten Kompositschicht 1b, welche jeweils eine Innenelektrode bzw. eine Signalleitung 2 in einer linken und einer rechten Hälfte aufweist. Beide Signalleitungen durchqueren die Ebene gänzlich und sind an je einem Ende mit einem Außenkontakt 4 desselben elektrischen Potentials kontaktiert.

Figur 19 zeigt die mit der Figur 11 vorgestellte Ebene III. der Funktionsschicht 1a. Es liegen sich wieder zwei T-förmige Innenelektroden spiegelsymmetrisch gegenüber in einer der Figur 9 sowie der zugehörigen Beschreibung entsprechenden Weise. Auch hier sind die T-förmigen Elektroden als Masseelektroden bzw. als Masseleitungen ausgeführt, welche mit einer Masse verbunden sind und Signale bestimmter Frequenzen ableiten können. Neben einer jeden T-förmigen Innenelektrode ist auf beiden Seiten eine längliche, rechteckige Innenelektrode angeordnet. Dabei liegen sich in der linken Hälfte und in der rechten Hälfte der Ebene angeordnete rechteckige Innenelektroden spiegelsymmetrisch gegenüber. Die Funktionen der T-förmigen Innenelektroden, der rechteckigen Innenelektroden sowie deren Wechselwirkungen im Sinne einer Signalableitung entsprechen der Beschreibung zu Figur 9. In dem Falle, dass die Funktionsschicht eine Varistorkeramik aufweist, sind gemäß dieses Ausführungsbeispiels jedoch gleich zwei Varistorstrecken an jeder Seite einer T-förmigen Masseelektroden bereitgestellt. Nicht nur können dadurch höhere Stoßspannungen kontrolliert abgeleitet werden, es können auch mehrere Signale dem elektrischen Bauelement über eine einzige Seitenfläche zugeführt und gleichzeitig durch ihn bearbeitet werden. Somit wird ein bidirektionale Konstruktion angegeben. Ein Strom, der von zwei sich in der linken Hälfte befindlichen rechteckigen Innenelektroden getragen wird, wird durch die sich zumindest teilweise orthogonal oberhalb der rechteckigen Innenelektroden befindlichen Signalleitung der Kompositschicht 1b mitgetragen. Analoges gilt für die Innenelektroden in der rechten Hälfte der Ebene III. des elektrischen Bauelements.

Figur 20 zeigt eine unterste Kompositschicht 1b des elektrischen Bauelements ohne Innenelektroden in der Ebene IV. Das elektrische Bauelement 1 könnte beispielsweise mittels der Unterseite dieser Kompositschicht auf eine Leiterplatte montiert werden, wodurch Streukapazitäten bezogen auf die Leiterplatte bzw. von der Leiterplatte ausgehende elektromagnetische Felder schlechter zur aktiven Funktionsschicht bzw. zur aktiven obersten Kompositschicht gelangen können. Somit können die vom elektrischen Bauelement bearbeiten Signale mit geringeren Störungen bearbeitet werden bzw. es kann die Leiterplatte effektiver vor Stoßspannungswirkungen geschützt werden.

Figur 21 zeigt eine Schnittansicht eines anderen elektrischen Bauelements 1 in einem Schnitt I. (dessen Position in der Figur 24 gezeigt wird). Ein Schnitt einer in der mittleren Funktionsschicht 1a liegenden Innenelektrode 2, Schnitte von zwei Innenelektroden 2 innerhalb der obersten Kompositschicht 1b sowie Schnitte von zwei Innenelektroden 2 einer untersten Kompositschicht 1b werden gezeigt.

Figur 22 ist eine perspektivische Darstellung eines elektrischen Bauelements, einige dessen Schnitte mittels der Figuren 21, 23, 24 und 25 gezeigt werden. Es können Außenkontakte 4, wie mit der Figur 7 bereits beschrieben, ausgebildet sein.

Figur 23 zeigt die mit der Figur 21 vorgestellte Ebene II. der obersten Kompositschicht 1b, welche jeweils eine Innenelektrode bzw. eine Signalleitung 2 in einer linken und in einer rechten Hälfte aufweist. Beide Signalleitungen durchqueren die Ebene gänzlich und sind an je einem Ende mit einem Außenkontakt 4 kontaktiert, der denselben elektrischen Potential trägt, wie die mit ihm verbundene Signalleitung.

Figur 24 zeigt die mit der Figur 21 vorgestellte Ebene III. der Funktionsschicht 1a. Es wird eine T-förmige Innenelektrode 2 in der Form einer Masseelektroden bzw. Masseleitung gezeigt, welche einen Stamm aufweist, dessen Ende zur Kontaktierung mit einem Außenkontakt 4 an eine Seitenfläche des elektrischen Bauelements herangeführt ist. Gegenüber des zum Stamm senkrecht verlaufenden Schenkels der T-förmigen Masseelektrode sind mit einem Abstand zwei rechteckige Innenelektroden angeordnet, welche jeweils mittels eines Endes mit einem Außenkontakt, der an der dem mit der Masseelektrode verbundenen Außenkontakt gegenüber liegenden Seitenfläche des elektrischen Bauelements angeordnet ist, kontaktiert sind. Die rechteckigen Innenelektroden sind dabei zumindest teilweise in orthogonaler Projektion unterhalb der an den entsprechenden Seitenhälften angeordneten Signalleitungen der obersten Kompositschicht 1b angeordnet. Die Funktionen der T-förmigen Innenelektroden, der rechteckigen Innenelektroden sowie deren Wechselwirkungen im Sinne einer Signalableitung entsprechen der Beschreibung zu Figur 9. Es werden in diesem Falle zwei kapazitive Bereiche zwischen der einen Masseelektrode und den rechteckigen Innenelektroden der Funktionsschicht gebildet.

Figur 25 zeigt die mit der Figur 21 vorgestellte Ebene IV. der untersten Kompositschicht 1b. Diese ist wie die oberste Kompositschicht 1b ausgeführt. Das bedeutet einerseits, dass alle über die drei Schichten des elektrischen Bauelements verteilten Signalleitungen der linken Hälfte des Bauelements mit gemeinsamen Außenkontakten verbunden sind und andererseits, dass alle über die drei Schichten des elektrischen Bauelements verteilten Signalleitungen der rechten Hälfte des Bauelements mit gemeinsamen Außenkontakten verbunden sind. In die jeweiligen Hälften des Bauelements zugeführte Signale werden also jeweils gleichzeitig über drei Leitungen getragen, die mit einer einzigen Masseleitung verbunden sind.

Figur 26 zeigt eine Schnittansicht eines anderen elektrischen Bauelements 1 in einem Schnitt I. (dessen Position in der Figur 24 gezeigt wird). Es werden Schnitte von zwei in der mittleren Funktionsschicht 1a liegenden Innenelektroden 2, Schnitte von zwei Innenelektroden 2 innerhalb der obersten Kompositschicht 1b sowie ein Schnitt einer Innenelektrode 2 innerhalb einer untersten Kompositschicht 1b gezeigt.

Figur 27 ist eine perspektivische Darstellung eines elektrischen Bauelements, einige dessen Schnitte mittels der Figuren 26, 28, 29 und 30 gezeigt werden. Es können streifenförmige Außenkontakte 4, wie mit der Figur 7 bereits beschrieben, ausgebildet sein, die die Innenelektroden kontaktieren.

Figur 28 zeigt die mit der Figur 26 vorgestellte Ebene II. der obersten Kompositschicht 1b. Es werden zwei je in einer rechten und in einer linken Hälfte des Bauelements liegende Innenelektroden 2 bzw. Signalleitungen 2 gezeigt, die jeweils die Kompositschicht lateral vollständig durchqueren und an je einem Ende mit einem Außenkontakt 4 kontaktiert sind.

Figur 29 zeigt die mit der Figur 27 vorgestellte Ebene III. der mittleren Funktionsschicht 1a des elektrischen Bauelements. Die Konstruktion, Anordnung und Wirkungen der Innenelektroden bzw. Signalleitungen 2 bzw. T-förmigen Masseelektroden entsprechen denjenigen der Figur 9 und der dazugehörigen Beschreibung.

Figur 30 zeigt die mit der Figur 26 vorgestellte Ebene IV. der untersten Kompositschicht 1b. Es wird eine Innenelektrode 2 bzw. Signalleitung gezeigt, welche die Ebene IV. lateral gänzlich durchquert und mit denselben Außenkontakten 4 kontaktiert ist, wie die T-förmigen Masseelektroden der Funktionsschicht 1a. Das bedeutet, dass die einzige Signalleitung 2 der untersten Kompositschicht bei geringer Streukapazität gemeinsam mit den Masseelektroden 2 der Funktionsschicht 1a Signale bzw. elektrische Ströme trägt und sicher ableiten kann.

### Bezugszeichenliste

- 1: keramischer Grundkörper
- 1a: erste Schicht des Grundkörpers
- 1b: zweite Schicht des Grundkörpers
- 2: Innenelektroden
- 3: Kontaktierungsmittel
- 4: Außenkontakte
- 5: Lötkugel
- EM: elektrisches Bauelementmodul
- I.: erste Schnittebene des elektrischen Bauelements
- II.: zweite Schnittebene des elektrischen Bauelements
- III.: dritte Schnittebene des elektrischen Bauelements
- IV.: vierte Schnittebene des elektrischen Bauelements

## Patentansprüche

1. Elektrisches Bauelement mit einem keramischen Grundkörper (1), der mehrere keramische Schichten (1a, 1b) aufweist, wobei
- eine eine Funktionskeramik enthaltende Funktionsschicht (1a) an eine Kompositschicht (1b) angrenzt, und
- die Kompositschicht Zirkonoxid und einen Glasfüllstoff enthält,
wobei die Kompositschicht (1b) zumindest eine Innenelektrode (2) aufweist.

2. Elektrisches Bauelement nach Anspruch 1, bei dem die Dielektrizitätskonstante der Kompositschicht (1b) kleiner ist, als die der Funktionsschicht (la).

3. Elektrisches Bauelement nach einem der Ansprüche 1 oder 2, bei dem die Kompositschicht (1b) eine Passivierungs- oder eine elektrische Entkopplungsfunktion aufweist.

4. Elektrisches Bauelement nach einem der vorhergehenden Ansprüche, bei dem der Glasfüllstoff der Kompositschicht (1b) Zinkborsilikat oder Aluminiumsilikat umfasst.

5. Elektrisches Bauelement nach einem der vorhergehenden Ansprüche, bei dem die Funktionsschicht (1a) mehrere Innenelektroden (2) aufweist, die jeweils mit zumindest einem an einer Oberfläche des elektrischen Bauelements angeordneten Außenkontakt (4) verbunden sind.

6. Elektrisches Bauelement nach Anspruch 5, bei dem die Innenelektroden (2) jeweils die Funktion einer Signalleitung aufweisen.

7. Elektrisches Bauelement nach einem der Ansprüche 5 oder 6, bei dem zumindest eine Innenelektrode (2) eine Masseelektrode ist und die Masseelektrode (2) an eine andere Innenelektrode (2) der Funktionsschicht (1a) kapazitiv gekoppelt ist.

8. Elektrisches Bauelement nach einem der Ansprüche 5 bis 7, bei dem die Innenelektroden (2) der Funktionsschicht (1a) teilweise ins Innere des elektrischen Bauelements verlaufen und nur an einem Ende mit einem Außenkontakt verbunden sind.

9. Elektrisches Bauelement nach einem der vorhergehenden Ansprüche, bei dem durch die Kompositschicht (1b) eine durch die Innenelektrode (2) der Kompositschicht (1b) erzeugte Streukapazität reduzierbar ist.

10. Elektrisches Bauelement nach einem der vorhergehenden Ansprüche, bei dem die zumindest eine Innenelektrode (2) der Kompositschicht (1b) die Funktion einer Signalleitung aufweist.

11. Elektrisches Bauelement nach einem der vorhergehenden Ansprüche, bei dem die zumindest eine Innenelektrode (2) der Kompositschicht (1b) eine Masseelektrode ist.

12. Elektrisches Bauelement nach einem der vorhergehenden Ansprüche, bei dem die zumindest eine Innenelektrode (2) der Kompositschicht (1b) die Kopplungskapazität zwischen zwei Innenelektroden der Funktionsschicht (1a) reduziert.

13. Elektrisches Bauelement nach Anspruch 12, bei dem die zumindest eine Innenelektrode (2) der Kompositschicht (1b) die Kopplungskapazität zwischen einer Masseelektrode und einer anderen Innenelektrode der Funktionsschicht (1a) reduziert.

14. Elektrisches Bauelement nach einem der vorhergehenden Ansprüche, bei dem die Innenelektrode (2) der Kompositschicht (1b) sie vollständig durchquert und an jedem Ende mit einem Außenkontakt (4) verbunden ist.

15. Elektrisches Bauelement nach einem der vorhergehenden Ansprüche, bei dem die Funktionsschicht (1a) eine Varistorkeramik oder eine Kondensatorkeramik enthält.

## Claims

1. Electrical component comprising a ceramic basic body (1) having a plurality of ceramic layers (1a, 1b), wherein
- a functional layer (la) containing a functional ceramic adjoins a composite layer (1b), and
- the composite layer contains zirconium oxide and a glass filler,
wherein the composite layer (1b) has at least one internal electrode (2).

2. Electrical component according to Claim 1, wherein the dielectric constant of the composite layer (1b) is less than that of the functional layer (la).

3. Electrical component according to either of Claims 1 and 2, wherein the composite layer (1b) has a passivation function or an electrical decoupling function.

4. Electrical component according to any of the preceding claims, wherein the glass filler of the composite layer (1b) comprises zinc borosilicate or aluminium silicate.

5. Electrical component according to any of the preceding claims, wherein the functional layer (la) has a plurality of internal electrodes (2) each connected to at least one external contact (4) arranged at a surface of the electrical component.

6. Electrical component according to Claim 5, wherein the internal electrodes (2) each have the function of a signal line.

7. Electrical component according to either of Claims 5 and 6, wherein at least one internal electrode (2) is an earth electrode and the earth electrode (2) is capacitively coupled to another internal electrode (2) of the functional layer (la).

8. Electrical component according to any of Claims 5 to 7, wherein the internal electrodes (2) of the functional layer (la) partly run into the interior of the electrical component and are connected to an external contact only at an end.

9. Electrical component according to any of the preceding claims, wherein a stray capacitance produced by the internal electrode (2) of the composite layer (1b) can be reduced by the composite layer (1b).

10. Electrical component according to any of the preceding claims, wherein the at least one internal electrode (2) of the composite layer (1b) has the function of a signal line.

11. Electrical component according to any of the preceding claims, wherein the at least one internal electrode (2) of the composite layer (1b) is an earth electrode.

12. Electrical component according to any of the preceding claims, wherein the at least one internal electrode (2) of the composite layer (1b) reduces the coupling capacitance between two internal electrodes of the functional layer (la).

13. Electrical component according to Claim 12, wherein the at least one internal electrode (2) of the composite layer (1b) reduces the coupling capacitance between an earth electrode and another internal electrode of the functional layer (la).

14. Electrical component according to any of the preceding claims, wherein the internal electrode (2) of the composite layer (1b) completely traverses it and is connected to an external contact (4) at each end.

15. Electrical component according to any of the preceding claims, wherein the functional layer (la) contains a varistor ceramic or a capacitor ceramic.

## Revendications

1. Composant électrique avec un corps de base céramique (1), lequel présente plusieurs couches céramiques (1a, 1b),
- une couche fonctionnelle (la) contenant une céramique fonctionnelle jouxtant une couche composite (1b), et
- la couche composite contenant de l'oxyde de zirconium et une matière de charge de type verre,
la couche composite (1b) présentant au minimum une électrode interne (2).

2. Composant électrique selon la revendication 1, dans lequel la constante diélectrique de la couche composite (1b) est plus faible que celle de la couche fonctionnelle (la).

3. Composant électrique selon l'une des revendications 1 ou 2, dans lequel la couche composite (1b) présente une fonction de passivation ou une fonction de découplage électrique.

4. Composant électrique selon l'une des revendications précédentes, dans lequel la matière de charge de type verre de la couche composite (1b) comprend du borosilicate de zinc ou du silicate d'aluminium.

5. Composant électrique selon l'une des revendications précédentes, dans lequel la couche fonctionnelle (la) présente plusieurs électrodes internes (2), lesquelles sont respectivement reliées à au moins un contact extérieur (4) disposé sur une surface du composant électrique.

6. Composant électrique selon la revendication 5, dans lequel les électrodes internes (2) présentent respectivement la fonction d'un circuit d'acheminement de signaux.

7. Composant électrique selon l'une des revendications 5 ou 6, dans lequel au moins une électrode interne (2) est une électrode de masse, et l'électrode de masse (2) est couplée de manière capacitive à une autre électrode interne (2) de la couche fonctionnelle (la).

8. Composant électrique selon l'une des revendications 5 à 7, dans lequel les électrodes internes (2) de la couche fonctionnelle (la) s'étendent partiellement à l'intérieur du composant électrique et sont reliées seulement à une extrémité avec un contact extérieur.

9. Composant électrique selon l'une des revendications précédentes, dans lequel, grâce à la couche composite (1b), une capacité parasite générée par l'électrode interne (2) de la couche composite (1b) peut être réduite.

10. Composant électrique selon l'une des revendications précédentes, dans lequel l'au moins une électrode interne (2) de la couche composite (1b) présente la fonction d'un circuit d'acheminement de signaux.

11. Composant électrique selon l'une des revendications précédentes, dans lequel l'au moins une électrode interne (2) de la couche composite (1b) est une électrode de masse.

12. Composant électrique selon l'une des revendications précédentes, dans lequel l'au moins une électrode interne (2) de la couche composite (1b) réduit la capacité de couplage entre deux électrodes internes de la couche fonctionnelle (la).

13. Composant électrique selon la revendication 12, dans lequel l'au moins une électrode interne (2) de la couche composite (1b) réduit la capacité de couplage entre une électrode de masse et une autre électrode interne de la couche fonctionnelle (la).

14. Composant électrique selon l'une des revendications précédentes, dans lequel l'électrode interne (2) de la couche composite (1b) la traverse complètement et est reliée à chaque extrémité avec un contact extérieur (4).

15. Composant électrique selon l'une des revendications précédentes, dans lequel la couche fonctionnelle (la) contient une céramique pour varistance ou une céramique de condensateur.
